# EUROPÄISCHE PATENTANMELDUNG

(11) **EP 4 681 529 A1**
(43) Veröffentlichungstag der Anmeldung: **21.01.2026**
(21) Anmeldenummer: 25187366.7
(22) Anmeldetag: 03.07.2025
(51) Int. Cl.: A01G 31/02

(54) **AQUAPONISCHE KULTURANLAGE**

(30) Priorität: 15.07.2024 DE 102024120188
(71) Anmelder: Alfred-Wegener-Institut Helmholtz-Zentrum für Polar- und Meeresforschung, 27570 Bremerhaven (DE)
(72) Erfinder: AMIRHOSSEIN, KARAMYAR, 27568 BREMERHAVEN (DE); NASTARAN RAZAVI, SUSAN, 27568 BREMERHAVEN (DE)

(57) **Zusammenfassung**

Bei bekannten Anlagen, die Pflanzenkultur mit Fischkultur symbiotisch verbinden, ist das obere Pflanzgefäß (02) fest mit dem unteren Wassergefäß (03) verbunden, sodass nur die gesamte Anlage (01) gedreht werden kann. Auftretende Biegekräfte von Pflanzen können Instabilitäten verursachen. Bei der Erfindung sind Pflanzgefäß (02) und Wassergefäß (03) mittels eines Drehlagers (46) drehbar aufeinander gelagert, sodass das Pflanzgefäß (02) unabhängig vom Wassergefäß (03) auf diesem gedreht werden kann. Weiterhin ist eine Stützplatte (31) über eine Stützvorrichtung (11) mit einer Bodenschale (08) am Pflanzgefäß (02) verbunden, sodass auftretende Kräfte in die Bodenschale (08) eingeleitet werden. Über eine Zulaufvorrichtung (19) wird ein Wasserkreislauf zwischen Wassergefäß (03) und Pflanzgefäß (02) erzeugt, wobei die Zulaufvorrichtung (19) sich nicht mit dem Pflanzgefäß (02) mitdreht. Das Wassergefäß (02) ist auf Stützbeinen (16) gelagert und kann über Rollen (17) ebenfalls eigenständig gedreht werden. Dadurch kann eine optimale getrennte Ausrichtung von Pflanzgefäß (02) und Wassergefäß (03) nach funktionellen und ästhetischen Gesichtspunkten erreicht werden. Eine Vielzahl von weiteren Komponenten, die ebenfalls funktionelle und ästhetische Gesichtspunkte bedienen, kann optional installiert werden. Besonders geeignet ist die aquaponische Kulturanlage (01) für eine heimische Aufstellung, wobei eine einzelne große Pflanze kultiviert wird. Auch kann bei einer Skalierung eine private Versorgung mit entsprechenden Nahrungsmitteln betrieben werden.

## Beschreibung

Die Erfindung bezieht sich auf eine aquaponische Kulturanlage mit einem Pflanzgefäß für zumindest eine größere Einzelpflanze und einem Wassergefäß für Wassertiere, wobei das Pflanzgefäß auf dem Wassergefäß angeordnet ist, sowie mit einer Stützvorrichtung für die Einzelpflanze, die eine am oberen Rand des Pflanzgefäßes angeordnete Stützplatte mit einer zentralen Öffnung umfasst, und mit Stützbeinen, die sich am Untergrund abstützen.

Bei der Aquaponik handelt es sich um eine Kombination aus Aquakultur und Hydroponik in einem gemeinsamen Kreislaufsystem, bei der die Vorteile aus beiden Technologien vereint sind. Es sind ein Pflanzgefäß für Pflanzen und ein Wassergefäß ("Aquarium") für Fische oder andere Wassertiere vorhanden. Das Wasser aus dem Wassergefäß wird mitsamt Futterresten und Exkrementen in das Pflanzgefäß gepumpt. Durch die dort angesiedelten Bakterien wird das Wasser gereinigt und in den Exkrementen enthaltene Schadstoffe, beispielsweise Ammonium, werden in Nitrat und Phosphat umgewandelt, was ideale Nährstoffe für Pflanzen sind. Dieser kann über die Wurzeln direkt aufgenommen werden. Das gereinigte Wasser wird wieder in das Wassergefäß zurückgeleitet. Die Hydroponik ist die klassische Anbauweise aus dem Bereich der Hydrokultur, bei der es sich um eine Pflanzenzucht, zumeist Zierpflanzen, ohne Erde, aber zumeist in Blähtonkugeln handelt. Bei der Hydroponik werden Pflanzen auch ohne Erde aufgezogen, zumeist aber in einem Substrat aus Kokosfaser, Jute, Perlit oder Kies. Zumeist werden Nutzpflanzen gezüchtet, eine Zucht im heimischen Bereich ist aber ebenfalls problemlos möglich. Charakteristisch ist die Auffüllung des Pflanzgefäßes mit Wasser bis zu einer bestimmten Höhe, sodass das Substrat im Wasser angeordnet ist. Die Aeroponik ist ein Teilbereich der Hydroponik. Hierbei hängen die Wurzeln der Pflanzen in der Luft, zumeist in einem davor vorgesehenen Behälterregal. Die in der Luft bereits optimal mit Sauerstoff versorgten Luftwurzeln werden automatisch mit Sprühnebel befeuchtet und mit den nötigen Nährstoffen versorgt. Auch hierbei kann aber auf verschiedene Substrate zurückgegriffen werden, ein Wasserreservoir ist nicht vorhanden.

Eines der Probleme bei der Pflege von Aquarien und geschlossenen Aquakultursystemen ist der notwendige Wasserwechsel aufgrund eines übermäßigen Anstiegs von Nitrat- und Phosphatwerten. Obwohl diese Nährstoffe an sich nicht besonders gefährlich sind, kann ihre übermäßige Konzentration im System Stress, Krankheiten und den Tod der Fische verursachen. Zudem beeinflusst ein hoher Gehalt dieser Substanzen den Geschmack des Fischfleisches, wodurch es unangenehm und ungenießbar wird. Es ist wichtig zu beachten, dass diese Systeme ursprünglich für die Zucht von Speisefischen entwickelt wurden. Die Integration von Pflanzen in dieses System, welche hohe Mengen an Nitrat und Phosphat konsumieren, wird das Wasser vollständig reinigen. Somit wird das Problem des Wasserwechsels insgesamt eliminiert. Es handelt sich also um einen nachhaltigen Ansatz, der die Umweltauswirkungen minimiert und gleichzeitig die Qualität des Fischfleisches verbessert. Ein primäres Anliegen in der Pflanzenpflege, insbesondere bei Obstbäumen, betrifft ihre spezifischen Nährstoffanforderungen und die differenzierten Düngemittel, die zur Optimierung ihres Wachstums benötigt werden. Eine präzise Düngungsstrategie, kombiniert mit einem tiefgehenden Wissen und Fachkompetenz, ist unabdingbar. Für den Laien kann dieser Prozess äußerst kompliziert erscheinen. Mehrere wissenschaftliche Untersuchungen haben nachgewiesen, dass Nebenprodukte aus geschlossenen Aquakultursystemen effektiv als Düngemittel für Pflanzen eingesetzt werden können. Diese erfüllen adäquat alle Wachstums- und Produktionsanforderungen der Pflanzen durch einen natürlichen Prozess. Dies kann nicht nur die Pflanzenpflege erleichtern, sondern auch einen nachhaltigen Ansatz für die Ressourcenverwertung bieten.

Die Aquaponik weist eine somit Reihe von evidenten Vorteilen auf:
- keine Verwendung von Pestiziden, Herbiziden, Fungiziden und Insektiziden,
- bis zu 95% geringerer Wasserverbrauch durch Wasserkreislauf,
- effizienter Nährstoffeinsatz durch Nährstoff-Recycling,
- schnelle Wachstumsphasen der Pflanzen durch optimale Nährstoffversorgung,
- gesunde Fische und andere Wassertiere ohne Schadstoffbelastung durch natürlich gereinigtes Wasser (keine Geschmacksbeeinträchtigung bei Speisefischen),
- hydroponisches oder aeroponisches Konzept umsetzbar und
- Skalierung und Design auch für den heimischen Bedarf möglich.

### Stand der Technik

Der der Erfindung am nächsten kommende Stand der Technik ist aus der KR 101646638 B1 bekannt. Bei der gattungsbildenden aquaponischen Kulturanlage für den heimischen Bedarf sind vier Stützbeine an den Ecken eines quadratischen Pflanzgefäßes angeordnet. Das Wassergefäß ist auf dem Boden abgestützt. Pflanz- und Wassergefäß sind fest miteinander verbunden. Es kann eine einzelnen große Palme im Pflanzgefäß aufgenommen und gestützt werden

Aquaponische Kulturanlagen für viele kleine Pflanzen sind beispielsweise aus der US 8.966.816 B2 und der US 2014/0223819 A1 bekannt. Pflanz- und Wassergefäß sind fest miteinander verbunden. Aus der WO 2015/0160966 A1 und der US 2019/0110417 A1 sind aquaponische Kulturanlagen bekannt, bei denen viele kleine Pflanzgefäße in mehreren Ebenen übereinander um eine zentrale Rotationsachse oberhalb des Wassergefäßes drehbar angeordnet sind.

Bei größeren oder großen Pflanzen handelt es sich in der Regel um Palmen oder kleinere Bäume, beispielsweise Gummibäume, die gerne im heimischen Bereich aufgestellt werden. Die Größe solcher Pflanzen und ihr hohes Gewicht, beispielsweise bis zu 100 kg, führen dazu, dass eine große Kippgefahr für das Pflanzgefäß besteht. Außerdem ist es sehr schwer zu handhaben, beispielsweise bezüglich einer Ortsänderung. Einzelne Merkmale bei der Aufnahme von Einzelpflanzen sind aus den nachfolgend genannten Druckschriften bekannt. Aus der KR 10 2 076 813 B1 ist es bekannt, ein Pflanzgefäß für eine größere Einzelpflanze auf dem Wassergefäß anzuordnen und eine Trichtervorrichtung vorzusehen. Aus der US 4 236 352 A ist dies auch bekannt, wobei die Trichtervorrichtung eine Bodenschale aufweist, die fest mit dem Pflanzgefäß an dessen unterem Ende verbunden ist und ihrer Bodenmitte eine Öffnung aufweist. Darunter befindet sich ein Trichter, der in das Wassergefäß hineinragt. Zusätzlich ist aus der US 4 829 709 A eine Stützanordnung für eine größere Einzelpflanze bekannt, die eine im oberen Rand des Pflanzgefäßes angeordnete Stützplatte mit einer zentralen Öffnung aufweist. Aus der DE 10 2013 112 980 A1 ist es bekannt, für eine ähnliche Anordnung Stützbeine vorzusehen, die sich am Untergrund abstützen. Schließlich ist aus der KR 10 2023 012 822 A eine ähnliche Anordnung bekannt, bei der zwischen der Bodenschale und dem Wassergefäß eine Drehplatte mit dazu paralleler Drehebene vorgesehen ist.

### Aufgabenstellung

Ausgehend von der zuvor aufgezeigten gattungsbildenden aquaponischen Kulturanlage liegt der vorliegenden Erfindung die **Aufgabe** zugrunde, diese so weiterzubilden, dass eine optimale Handhabung bei der Anwendung für zumindest eine große Einzelpflanze erreicht werden kann. Dabei soll auch insbesondere eine Anpassung an den heimischen Bereich berücksichtigt werden. Die bekannten Vorteile von aquaponischen Anlagen, insbesondere für den gewerblichen Bereich, sollen erhalten bleiben. Die erfindungsgemäße **Lösung** dieser Aufgabe ist dem Haupanspruch zu entnehmen. Vorteilhafte Weiterbildungen der erfindungsgemäßen aquaponischen Kulturanlage sind den Unteransprüchen zu entnehmen.

Zur Lösung der Aufgabe wird erfindungsgemäß vorgeschlagen, dass
- eine Trichtervorrichtung mit einer Bodenschale vorgesehen ist, wobei die Bodenschale fest mit dem Pflanzgefäß an dessen unterem Ende verbunden ist und in ihrer Bodenmitte eine Öffnung aufweist, in dem ein Drainagesieb, das in das Pflanzgefäß hineinragt, und darunter ein Trichter, der in das Wassergefäß hineinragt, angeordnet sind,
- die Stützvorrichtung eine feste Verbindungsvorrichtung zwischen der Stützplatte und der Bodenschale der Trichtervorrichtung umfasst und dass
- zumindest ein Drehlager vorgesehen ist, das zwischen der Bodenschale der Trichtervorrichtung und dem Wassergefäß angeordnet ist und eine dazu parallele Drehebene aufweist.

Die mit der Erfindung vorgeschlagene aquaponische Kulturanlage ist so aufgebaut, dass eine größere Einzelpflanze am Boden der Pflanzgefäßes abgestützt wird. Dadurch wird der Schwerpunkt der Anordnung verlagert und die Kippgefahr deutlich verringert. Zur technischen Realisierung dieses Konzepts ist am unteren Ende des Pflanzgefäßes, welches so groß ausgebildet ist, dass es auch eine große Pflanze samt Wurzelwerk einfach aufnehmen kann, eine damit fest verbundene Bodenschale vorgesehen, die mit der Stützvorrichtung bzw. der Stützplatte, die sich am oberen Rand des Pflanzgefäßes befindet und die Einzelpflanze stützend umschließt, fest verbunden ist. Die Stützplatte ist beispielsweise über längenverstellbare Stützbeine mit der Bodenschale verbunden. Die Stützvorrichtung leitet somit möglicherweise auftretende Kippkräfte, verursacht durch die auf die Stützplatte einwirkende große Pflanze, am oberen Rand des Pflanzgefäßes vorbei und beaufschlagt nur den stabilen Bodenbereich des Pflanzgefäßes damit. Um trotzdem eine gute Verbindung zwischen dem Pflanzgefäß und dem Wassergefäß zu erreichen, ist die Bodenschale erfindungsgemäß Teil einer Trichtervorrichtung, die zwischen dem Pflanzgefäß und dem Wassergefäß angeordnet ist. Durch sie wird das Pflanzgefäß auf dem Wassergefäß zentriert. Gleichzeitig sorgt ein mit einem Drainagesieb versehener Trichter, der in das Wassergefäß hineinragt, dafür, dass ein möglicherweise störendes Einlaufgeräusch des Wassers aus dem Pflanzgefäß in das Wassergefäß deutlich verringert wird.

Weiterhin ist bei der vorgeschlagenen aquaponischen Kulturanlage erfindungsgemäß vorgesehen, dass das Pflanzgefäß drehbar auf dem Wassergefäß gelagert ist. Somit kann das gesamte Pflanzgefäß mitsamt einer schweren und ausladenden Pflanze einfach und weitgehend kraftfrei gedreht und so optimal ausgerichtet werden. Dadurch kann die Pflanze beispielsweise für einen geraden und gleichmäßigen Wuchs immer wieder mit einer anderen Seite einfach zum Sonnenlichteinfall ausgerichtet werden. Dabei wird das schwere Wassergefäß nicht mitgedreht. Es kann in immer gleicher Weise ausrichtet sein, sodass beispielsweise darin arrangierte Dekorationen oder Beleuchtungen für den Betrachter immer optimal sichtbar sind. Zur technischen Realisierung der Drehbarkeit des Pflanzgefäßes auf dem Wassergefäß ist zwischen beiden zumindest ein Drehlager vorgesehen. Dabei verhindert die Ausgestaltung und Anordnung des zumindest einen Drehlagers, dass das Pflanzgefäß auf dem Wassergefäß kippelt.

Um ein Kippeln des Pflanzgefäßes auf dem Wassergefäß sicher zu vermeiden, können beispielsweise drei Drehlager in Form von Zylinderrollen gleichmäßig auf einem Umkreis um den Trichter herum verteilt sein. Bevorzugt und vorteilhaft ist es aber, wenn gemäß einer ersten Modifikation der Erfindung vorgesehen ist, dass das Drehlager als ringförmiges Nadellager ausgebildet und um den Trichter herum angeordnet ist, wobei vorhandene Versorgungsleitungen nicht mit dem Pflanzgefäß verbunden sind. Ein geschlossenes Nadellager ist sehr stabil bei Drehung, einfach einzubauen und besonders flach, sodass kein großer Spalt zwischen Pflanz- und Wassergefäß entsteht. Wenn vorhandene Versorgungsleitungen nicht mit dem Pflanzgefäß verbunden sind, kann das Pflanzgefäß beliebig gedreht werden, wobei auch eine Volldrehung durchführbar ist. Auf Rückdrehungen muss nicht geachtet werden. Sind Versorgungsleitungen mit dem Pflanzgefäß verbunden (beispielsweise flexible Schläuche oder Kabel), können diese bis zu einem gewissen Grad mitgedreht werden, wobei das Pflanzgefäß dann immer abwechselnd in beide Drehrichtungen gedreht werden sollte. Die Durchführung der Drehung kann sowohl einfach von Hand als auch in automatisierter oder ferngesteuerter Form erfolgen.

Die aquaponische Kulturanlage nach der Erfindung kann der Aufnahme beliebiger Pflanzen dienen, bevorzugt ist sie jedoch zur Aufnahme großer Pflanzen, insbesondere einer großen Pflanze, beispielsweise in Form einer Palme oder eines Zierbaumes, gedacht. Es wurde bereits ausgeführt, dass die besondere Stabilität der erfindungsgemäßen Anlage insbesondere dadurch bewirkt wird, dass durch die große Pflanze auftretende Kräfte über die Stützvorrichtung mit der Stützplatte im oberen Bereich des Pflanzgefäßes in dessen Bodenbereich eingeleitet werden. Damit dieser ausreichend von dem nur über Drehlager verbundenen Wassergefäß abgestützt werden kann, ist es von Vorteil, wenn auch das Wassergefäß gut abgestützt ist. Gemäß einer nächsten Erfindungsfortbildung ist daher bevorzugt vorgesehen, dass unterhalb des Wassergefäßes fünf oder mehr Stützbeine vorgesehen sind, die sternförmig um eine Zentralnabe angeordnet sind, wobei diese fest mit dem Wassergefäß verbunden ist. Dabei können die Stützbeine bevorzugt breit ausgeführt und horizontal angeordnet sein, und so mit großer Biegesteifigkeit viel Standfläche auf dem Untergrund übergreifen. Eine derartige sternförmige Abstützung garantiert dem gesamten Aufbau der aquaponischen Kulturanlage nach der Erfindung eine besondere Stabilität bei gleichzeitig ästhetischem Erscheinungsbild. Das Gewicht des gefüllten Wassergefäßes auf der Zentralnabe verdoppelt dabei die Stabilität und den Widerstand gegen ein Umkippen.

Um eine einfache Anpassung der sternförmigen Abstützung an unterschiedliche Umgebung zu ermöglichen, ist es gemäß einer weiteren Fortbildung der Erfindung auch bevorzugt und vorteilhaft, wenn horizontale Schraubelemente und vertikale Schraubelemente vorgesehen sind, die an der Zentralnabe angeordnet sind und der Befestigung und Ausbalancierung des Wassergefäßes dienen. Hierbei kann es sich beispielsweise um einfache Stellschrauben handeln. Weiterhin ist es auch besonders sinnvoll, wenn verstellbare Stabilisierungselemente vorgesehen sind, die der Abstützung des Wassergefäßes auf den Stützbeinen dienen. Das Wassergefäß, beispielsweise ein zylinderförmiges Aquarium, wird dann nicht nur im Nabenbereich, sondern auch an seinem Randbereich zuverlässig abgestützt. Ein Schwanken oder Kippen ist wirkungsvoll vermieden. Schließlich ist es gemäß einer folgenden Modifikation der Erfindung noch bevorzugt und vorteilhaft, wenn feststellbare Rollen vorgesehen sind, über die die Stützbeine am Untergrund abgestützt sind. Die Kombination von fünf horizontal und sternförmig um eine Zentralnabe herum angeordneten Stützbeinen, an deren nabenabgewandten Enden sich jeweils eine feststellbare Rolle befindet, ahmt die Unterkonstruktion einen modernen Drehstuhl nach. Durch die Rollen kann die gesamte Kulturanlage einfach an beliebigen Standorten platziert werden. Außerdem kann damit auch das Wassergefäß bei Bedarf gedreht werden. Ansonsten ist ja erfindungsgemäß nur das Pflanzgefäß drehbar auf dem Wassergefäß gelagert.

Große Pflanzen haben auch große Wurzeln, deren Dichte im Pflanzgefäß mit voranschreitendem Wachstum ebenfalls zunimmt. Da gerade eine große Pflanze über viele Jahre in dem Pflanzgefäß verbleiben soll, kann es passieren, dass das Wurzelwerk das Drainagesieb in der Öffnung in der Bodenmitte des Pflanzgefäßes verstopft. Anwachsende Bakterienkolonien können ebenfalls zu einer Behinderung des Wasserabflusses in das Wassergefäß führen. Zur Vermeidung eines unkontrollierten Wasserüberlaufs am oberen Rand des Pflanzgefäßes, der zur Beeinträchtigung der Fische im Wassergefäß oder zu Wasserschäden am Untergrund führen könnte, ist es deshalb bevorzugt und vorteilhaft, wenn eine Notüberlaufvorrichtung vorgesehen ist, die einen Schlauch umfasst, der sich von einer Durchgangsöffnung in der Stützplatte bis zur Mitte des Drainagesiebs erstreckt. Bis zur Stützplatte rückgestautes Wasser wird dadurch wieder zum Drainagesieb rückgeleitet, von wo aus es in das Wassergefäß einfließen kann. Dadurch, dass der Schlauch in der Mitte des Drainagesiebs endet, kommt es bei einer Drehung des Pflanzgefäßes nicht zu einer Verdrehung des Schlauchs. Wurzeln können in den direkt am Drainagesieb endenden Schlauch nicht eindringen. Für einen guten Wasserabfluss sorgt eine sanfte Neigung des Schlauchs im Pflanzgefäß. Das obere Ende des Schlauchs im Bereich der Stützplatte kann gleichzeitig genutzt werden, um über einen Trichter frisches Wasser in das System nachzufüllen, das dann über das Drainagesieb direkt in das Wassergefäß einfließt.

Weiterhin ist es gemäß einer Erfindungsmodifikation bevorzugt und vorteilhaft, wenn eine Futtervorrichtung vorgesehen ist, die mit dem Schlauch im Bereich der Durchgangsöffnung verbunden ist, wobei im Schlauch unterhalb der Stützplatte ein Bypassabzweig angeordnet ist. Auch das zugeführte Futtermittel gelangt dann unmittelbar über das Drainagesieb in das Wassergefäß zu den Fischen. Um die Funktionalität des Notüberlaufs durch die aufgesetzte Futtervorrichtung nicht zu beinträchtigen, ist kurz unterhalb der Stützplatte der Bypassabzweig in den Schlauch integriert. Dieser besteht aus einem T-Stück und einem kurzen Schlauchende, das unmittelbar unterhalb der Stützplatte endet. Der Bypassabzweig ist von oben nicht sichtbar. Er erhält die Funktion des Notüberlaufs natürlich auch für den Fall, dass frisches Wasser über die Durchgangsöffnungen und den Schlauch nachgefüllt wird und es zu einem Wasserüberlauf kommt, weil der Durchlauf über das Drainagesieb in das Wassergefäß be- oder sogar verhindert ist.

Ein Hauptmerkmal der aquaponischen Kulturanlage nach der Erfindung ist die praktische Drehbarkeit des Pflanzgefäßes, ohne dass das Wassergefäß mitgedreht wird. Versorgungsleitungen können bis zu einem gewissen Grad mitgedreht werden. Bevorzugt und vorteilhaft ist es gemäß einer nächsten Modifikation der Erfindung aber, wenn eine Zulaufvorrichtung vorgesehen ist, die mit dem Wassergefäß fest verbunden ist, wobei sie das Pflanzgefäß nicht berührt, und einen Bewässerungsring umfasst, der oberhalb der Stützplatte angeordnet ist. Über die Zulaufvorrichtung gelangt das belastete Wasser aus dem Wassergefäß in das Pflanzgefäß. Es liegt ein geschlossener Kreislauf vor, da das Wasser dann über das Pflanzgefäß zurück in das Wassergefäß läuft, wobei es beim Durchlaufen seine mineralischen Bestandteile an die Pflanze als Dünger abgibt und dadurch von der Pflanze gereinigt wird. Die Zulaufvorrichtung bei der Erfindung berührt das Pflanzgefäß nicht, sodass sie dessen freie Drehung zulässt, und endet in einem geschlossenen Bewässerungsring, der eine Vielzahl von Löchern aufweist und einen gleichmäßigen Zulauf des Wassers um die Pflanze herum gewährleistet. Dieser ist oberhalb der Stützplatte angeordnet und behindert deren Stützfunktion nicht. Weiterhin ist es vorteilhaft, wenn die Zulaufvorrichtung ein Durchflussmessgerät, einen Probenschlauch und eine Wasserpumpe umfasst, wobei die Wasserpumpe im Wassergefäß angeordnet ist und zuverlässig einen Wasserkreislauf gewährleistet. Die Zulaufmenge kann über ein Zulaufventil und das Durchflussmessgerät manuell oder automatisch geregelt werden. Schließlich können einfach Proben über den Probenschlauch gezogen werden, der beispielsweise über einen Absperrhahn in die Zulaufvorrichtung integriert ist. Die Proben können dann wissenschaftlich analysiert werden. Mit dem Wasserfluss aus dem Probenschlauch können außerdem auch andere Komponenten im oberen Bereich der aquaponischen Kulturanlage, wie Futterbehälter, Futterschlauch oder Stützplatte, einfach gereinigt werden. Weiterhin kann über den Probenschlauch in Zusammenarbeit mit entsprechenden Sensoren und einem Wasseranschluss des öffentlichen Versorgers automatisch Wasser nachgefüllt werden. Insbesondere Pflanzen mit großen, Wasser verdunstenden Blättern haben einen hohen Wasserverbrauch, der vom Nutzer nicht immer gleich registriert wird. Auch vorgesehene Heizgeräte können den Wasserverbrauch beschleunigen.

Die aquaponische Kulturanlage nach der Erfindung ist ein geschlossenes Kreislaufsystem. Wasser wird aus dem Wassergefäß in das Pflanzgefäß gepumpt und rieselt über die Pflanzenwurzeln wieder in das Wassergefäß zurück. Vorteilhaft ist es dabei, wenn eine ringförmige Filtermatte vorgesehen ist, die unterhalb der Stützplatte angeordnet ist. Über diese Filtermatte werden grobe Verschmutzungen aus dem Wassergefäß zurückgehalten. Weiterhin hat die Filtermatte eine akustische Dämpfungswirkung. Weiterhin ist es gemäß einer nächsten Modifikation vorteilhaft, wenn ein Substrat vorgesehen ist, das aus Blähtonkugeln besteht und in das Pflanzgefäß eingefüllt ist. In diesem Substrat, das aus der heimischen Hydrokultur sehr gut bekannt und kommerziell erhältlich ist, können sich die Wurzeln der Pflanze sehr gut verankern und an Nährstoffe gelangen, die sich in den Poren des Blähtons anreichern. Filtermatte und Substrat sorgen zudem für eine gute Sauerstoffanreicherung des durchrieselnden Wassers und arbeiten als Biofilter. Wenn kein Substrat verwendet wird, hängen die Wurzeln (Luftwurzeln) der Pflanze in der Luft und werden mit Wasser besprüht. Es wird dann ein aeroponisches Konzept umgesetzt.

Grundsätzlich läuft die aquaponische Kulturanlage nach der Erfindung im Kreislaufbetrieb, es muss weder Wasser zu- noch abgeführt werden. Für Wartungszwecke oder dergleichen ist es jedoch sinnvoll, wenn ein im Wassergefäß angeordnetes Ablaufrohr mit Ablaufsieb und ein außen am Wassergefäß angeordnetes Wasserstandsrohr vorgesehen sind, die miteinander verbunden sind. Zu Beginn des Betriebs der Kulturanlage ist ein mehrfacher Wasserwechsel sinnvoll, da die Pflanze erst anwachsen muss, bevor sie ihre volle Funktion bezüglich Nährstoffaustausch erreicht hat. Außerdem muss sie das Mikrobiom aus Bakterienkulturen erst aufbauen. Das Ablaufsieb verhindert, dass Fische beim Wasserablass versehentlich entweichen können. Über das Wasserstandsrohr an der Behälteraußenseite kann der Wasserstand im Wasserbehälter überprüft werden. Es kann eine Skala aufweisen, um die genaue Wassermenge im Wasserbehälter kontrollieren zu können. Es kann auch über einen Sensor verfügen, der bei sich stark veränderndem Wasserstand einen Alarm abgibt. Nach dem Prinzip der kommunizierenden Röhren ist es im Regelbetrieb geöffnet. Bei Wassertausch kann es durch ein Ventil verschlossen sein, um ein Überlaufen zu verhindern.

Die aquaponische Kulturanlage nach der Erfindung ist vornehmlich für eine Aufstellung im heimischen Wohnbereich geeignet und berücksichtigt daher auch ästhetische Gesichtspunkte. Dafür ist es vorteilhaft, wenn ein ringförmiges Beleuchtungssystem vorgesehen ist, das im unteren Bereich des Wassergefäßes angeordnet ist, wobei dessen Boden transparent ist. Es können so unterschiedliche Lichteffekte mit indirektem Licht erzeugt werden, die zum einen zum Vorteil für die Bewohner des Wassergefäßes sind, zum anderen die Attraktivität der Kulturanlage erhöhen - vergleichbar zu eine Ambientebeleuchtung bei einem TV-Gerät. Außerdem kann eine Beleuchtung im Wassergefäß das Wachstum und Eindringen von Wurzeln in den Wassertank erheblich behindern oder sogar verhindern. Eine manuelle oder automatische Wahl aus verschiedenen Lichtspektren und Farben ist möglich. Schließlich können noch eine Reihe von zusätzlichen Vorrichtungen bei der aquaponischen Kulturanlage nach der Erfindung zu Verbesserung von deren Funktionsweise, Innovativität und Komfortabilität vorgesehen sein. Hierbei kann es beispielsweise handeln um: ein Lautsprechersystem, eine Automatisierungseinrichtung, eine Fernsteuereinrichtung, eine Überwachungseinrichtung, eine Energieversorgungseinrichtung, eine Belüftungseinrichtung, eine Pflanzenlampeneinrichtung und / oder ein Insektenabwehrsystem. Eine Musikwiedergabe kann sich auf die Bewohner von Pflanz- und Wassergefäß und der umgebenden Wohnung sehr positiv auswirken. Klassische Musik hat beispielsweise Auswirkungen auf das Wachstum von Pflanzen und Tieren. Einrichtungen zur Automatisierung, Fernsteuerung und Überwachung ermöglichen eine komfortable Bedienung, insbesondere auch aus der näheren oder weiteren Ferne. Eine Kombination mit einem LAN oder WLAN, einer Smartphone-App und/oder einer Alarmeinrichtung ist ohne weiteres möglich. Normalerweise wird die Pumpe mit Strom aus dem Festnetz oder von einem umweltfreundlichen Solarmodul betrieben. Eine autarke Energieeinrichtung in Form einer Batterie überbrückt Stromausfälle und Umplatzierungen der Anlage. Eine optionale Belüftungseinrichtung, beispielsweise in Form von drei Lüftern am Umfang des Wassergefäßes, die aus drei unterschiedlichen Winkeln nach oben blasen, bewirkt eine optimale Belüftung der Pflanze und erleichtert den Gastaustausch, sodass die Photosynthese verbessert wird. Zudem reguliert der konstante Luftstrom die Feuchtigkeit im Pflanzenbereich, wodurch Schimmelbildung verhindert wird. Außerdem wird die Pflanzenstruktur trainiert, sodass sie widerstandsfähiger gegenüber Belastungen wird. Sanfte Bewegungen der Blätter haben einen ästhetischen Reiz und können zusammen mit einer Beleuchtung für interessante Lichteffekte sorgen. Potenzielle Insekten und Schädlinge können durch ein Insektenabwehrsystem vermieden werden. Hierbei kann es sich beispielsweise um eine UV-Lampe handeln.

Mit der aquaponischen Kulturanlage nach der Erfindung ist spezialisiertes Wissen im Bereich der Aquakultur und der Agrikultur für den Anwender nicht zwingend erforderlich. Sie kann für wissenschaftliche Untersuchungen, kommerzielle Aufzuchten von Pflanzen und Wassertieren oder als dekoratives Element eingesetzt werden. So kann es dem "Hobbyzücher" ermöglicht werden, spezielle Pflanzen und Wassertiere, insbesondere Fische, zuhause zu züchten. Dies kann sowohl nur zu dekorativen Zwecken als auch - bei einer entsprechenden Skalierung - zur Nahrungserzeugung erfolgen. Weiterhin ist es möglich, die Anlage - unter Zusatz eines Abschäumers - mit Salzwasser zu betreiben, sodass entsprechende Pflanzen, wie Mangroven, und Wassertiere, wie Zierfische und Korallen, gehalten werden können. Alles in allem kann die mit der Erfindung beanspruchte aquaponische Kulturanlage zutreffend mit dem Begriff "Magic Ponics" bezeichnet werden.

Weitere Erläuterungen zu der vorliegenden Erfindung und ihren jeweils angesprochenen Modifikationen können den nachfolgend aufgezeigten Ausführungsbeispielen entnommen werden.

### Ausführungsbeispiele

Nachfolgend wird die mit der vorliegenden Erfindung beanspruchte aquaponischen Kulturanlage und ihre bevorzugten Modifikationen in Ausführungsbeispielen zum besseren Verständnis der Erfindung noch weitergehend erläutert. Dabei zeigt die
- **Fig.** 1: eine schematische Vorderansicht der Anlage,
- **Fig.** 2: eine perspektivische Draufsicht auf die Anlage gemäß Fig. 1,
- **Fig.** 3: eine schematische Draufsicht auf die Anlage gemäß **Fig.1****,**
- **Fig.** 4: eine Detailansicht der Anlage im Bereich des Trichters,
- **Fig.** 5: eine schematische Draufsicht im Bereich des Wassergefäßes,
- **Fig.** 6: eine Detailansicht im Drainagebereich und
- **Fig.** 7: eine Detailansicht im unteren Bereich des Wassergefäßes.

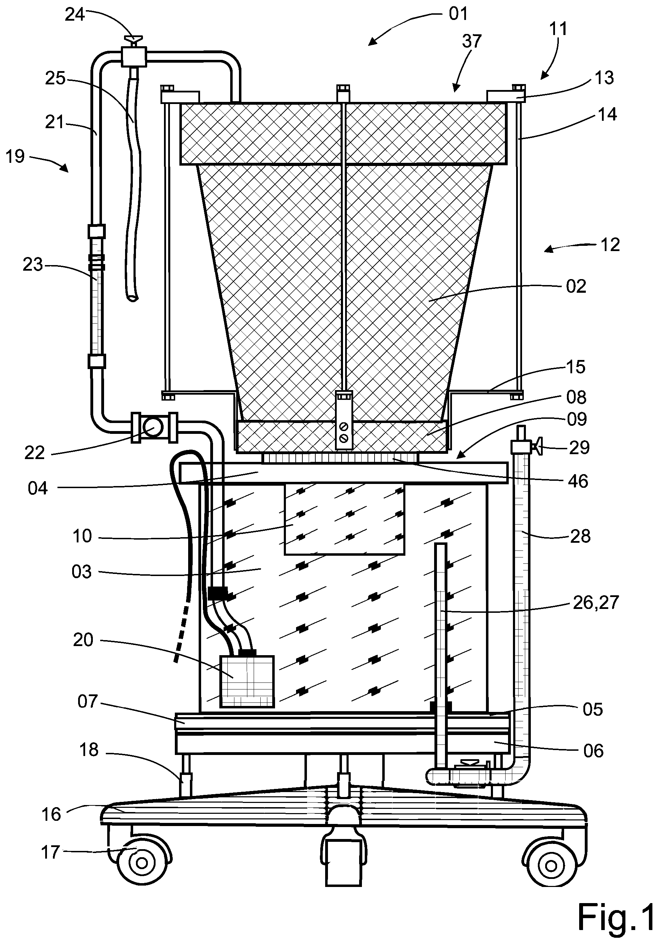

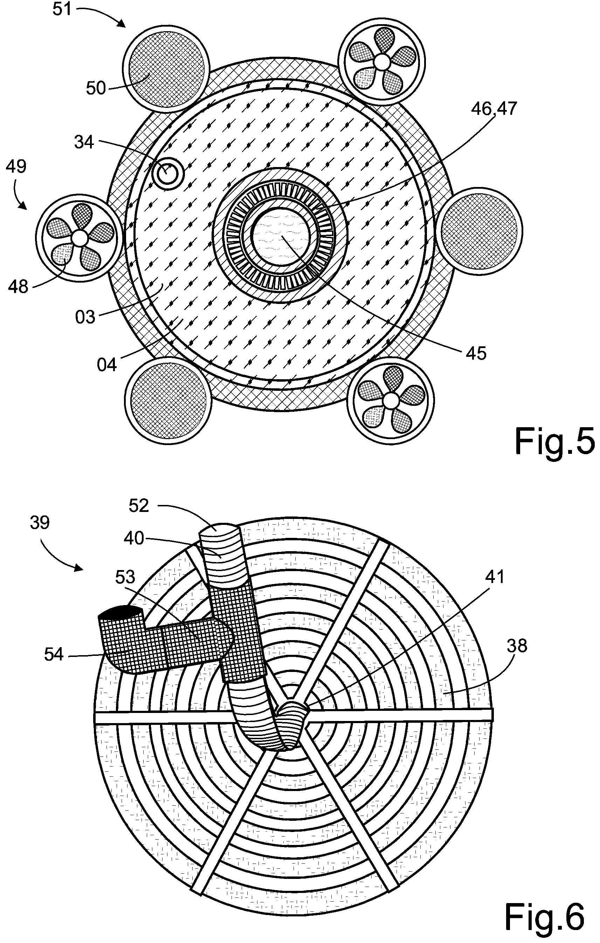

In der **Fig.** 1 ist schematisch eine aquaponische Kulturanlage **01** mit einem Pflanzgefäß **02** und einem Wassergefäß **03** in der Ansicht dargestellt. Das Pflanzgefäß **02** ist drehbar auf dem Wassergefäß **03** gelagert, vergleiche **Fig.** 5. Im dargestellten Ausführungsbeispiel handelt es sich bei dem Pflanzgefäß **02** um einen sehr großen Blumentopf für eine einzelne große Pflanze und bei dem Wassergefäß **03** um ein zylindrisches Aquarium aus Plexiglas für Zierfische. Das Pflanzgefäß **02** ist im Betrieb mit einem Substrat (beispielsweise Blähton 8 mm bis 16 mm) gefüllt und nimmt die Wurzeln einer einzelnen großen Pflanze oder mehrerer mittelgroßer Pflanzen auf. Das Wassergefäß **03** ist im Betrieb mit Wasser gefüllt. Es verfügt über einen transparenten Deckel **04** und einen transparenten Boden **05,** der von einer Trägerplatte **06** gestützt ist. Im Randbereich des transparenten Bodens **05** ist ein ringförmiges Beleuchtungssystem **07** angeordnet, mit dem über den transparenten Boden **05** Lichteffekte im Wassergefäß **03** erzeugt werden können. Das Pflanzgefäß **02** weist einem seinem unteren Ende eine fest verbundene Bodenschale **08** als Teil einer Trichtervorrichtung **09,** wobei in der Bodenmitte der Bodenschale **08** ein Trichter **10** angeordnet ist, der in das Wassergefäß **03** hineinragt. Das Pflanzgefäß **02** weist im dargestellten Ausführungsbeispiel weiterhin eine Stützvorrichtung **11** für eine einzelne große Pflanze auf. Die Stützvorrichtung **11** umfasst unter anderem eine Verbindungsvorrichtung **12** mit vier Haltern **13** auf, die jeweils über Stützstangen **14** und Winkel **15** mit der Bodenschale **08** verbunden sind. Dabei ist der Abstand zwischen den Haltern **13** und den Winkeln **15** einstellbar, da es sich bei den Stützstangen **14** um Gewindestangen handelt. Unterhalb des Wassergefäßes **03** sind fünf Stützbeine **16** horizontal sternförmig angeordnet, die sich über feststellbare Rollen **17** auf einem Untergrund, beispielsweise Parkett, Fliesen oder Teppichboden, abstützen. Zur Ausrichtung und Stabilisierung des Wassergefäßes **03** auf den Stützbeinen **16** sind fünf verstellbare Stabilisierungselemente **18** vorgesehen.

Die aquaponische Kulturanlage **01** verfügt weiterhin über eine Zulaufvorrichtung **19,** die mit dem Wassergefäß **03** fest verbunden ist, das Pflanzgefäß **02** aber nicht berührt. Die Zulaufvorrichtung **19** umfasst im Ausführungsbeispiel unter anderem eine elektrische Wasserpumpe **20,** die im Wassergefäß **03** angeordnet ist. Diese fördert Wasser in ein Zulaufrohr **21** außerhalb des Pflanzgefäßes **02.** Im Zulaufrohr **21** befinden sich ein Zulaufventil **22,** ein Durchflussmessgerät **23** und ein Absperrventil **24.** An dieser ist ein Probenschlauch **25** angeschlossen, über den Wasser aus dem Wassergefäß **03** abgezogen werden kann, beispielsweise zur Probennahme oder zu Reinigungszwecken. Im Wassergefäß **03** ist weiterhin ein Ablaufrohr **26** angeordnet, das gleichzeitig als Ablaufsieb **27,** das insbesondere ein Entweichen von Fischen verhindert, ausgebildet ist. Über das Ablaufrohr **26** kann Wasser aus dem Wassergefäß **03** abfließen. An dessen Außenseite ist ein mit dem Ablaufrohr **26** verbundenes Wasserstandsrohr **28** angeordnet. An diesem ist nach dem Prinzip der kommunizierenden Röhren der Wasserstand im Wassergefäß **03** erkennbar. Am freien Ende des Wasserstandsrohrs **28** ist ein Ventil **29,** beispielsweise in Form eines Kugelhahns, angeordnet, das im Betriebsfall geöffnet ist. Bei einem Wassertausch im Wassergefäß **03** ist es vorteilhafterweise geschlossen.

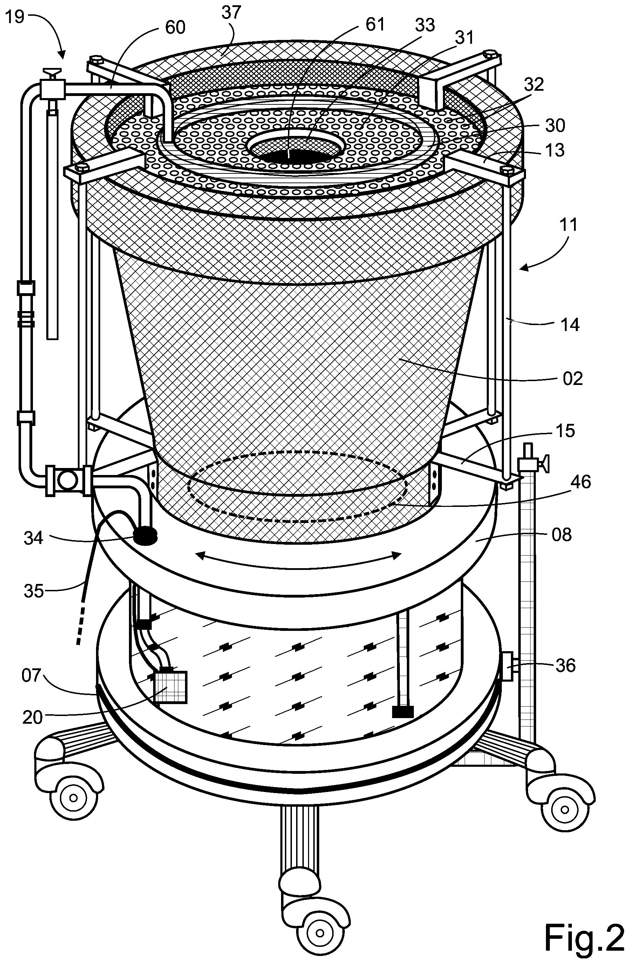

In der **Fig.** 2 ist die aquaponische Kulturanlage **01** gemäß **Fig.** 1 in der schematischen, perspektivischen Draufsicht dargestellt. Für alle Figuren gilt: gleiche, jeweils nicht erläuterte und weitere Bezugszeichen sind den jeweils anderen Figuren zu entnehmen. Im Bereich der Zulaufvorrichtung **19** ist ein geschlossener Bewässerungsring **30** dargestellt, der über eine Vielzahl von kleinen Auslassöffnungen verfügt. Der Bewässerungsring **30** liegt oberhalb einer Stützplatte **31,** die Teil der Stützvorrichtung **11** ist. Die Stützplatte **31** weist eine Vielzahl von Durchlassöffnungen **32** auf, sodass eine gleichmäßige Bewässerung des Inneren des Pflanzgefäßes **02,** in dem sich das Substrat befindet, erreicht ist. Der Bewässerungsring **30** berührt die Stützplatte **31** nicht. In ihrer Mitte weist die Stützplatte **31** eine zentrale Öffnung **61** auf, durch die die große Pflanze hindurchgreift und von dieser gestützt wird. Weiterhin sind andere Komponenten der Stützvorrichtung **11** dargestellt: die Halter **13,** die Stützstangen **14** und die Winkel **15,** die fest mit der Bodenschale **08** verbunden sind. Gut zu erkennen ist, dass über die Stützvorrichtung **11** mögliche Kippkräfte durch die große Pflanze in die Bodenschale **08** eingeleitet werden, sodass die Anlage **01** sehr stabil ist. Unterhalb der Stützplatte **31** ist eine dicke ringförmige Filtermatte **33** angeordnet, durch die das Wasser hindurchrieselt, wobei es von gröberen Partikel befreit und gleichzeitig belüftet wird.

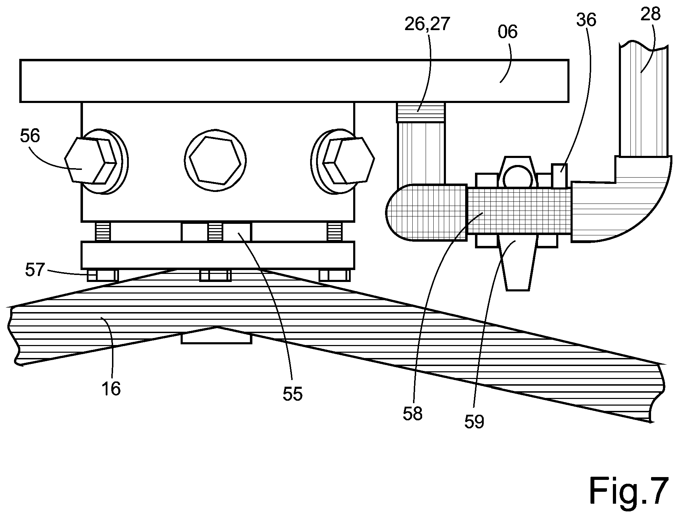

In der **Fig.** 2 ist weiterhin eine Zugangsöffnung **34** zum Wassergefäß **03** zu erkennen, über die optional Futter oder Wasser direkt zugeführt oder Luft und Verunreinigungen direkt abgeführt werden können. Auch wird durch die stets offene Zugangsöffnung **34** während des Kreislaufbetriebs ein Unterdruck im Wassergefäß **03** verhindert. Ein Elektrokabel **35** der Wasserpumpe **20** wird durch eine separate Durchgangsöffnung im Deckel **04** nach außen geleitet. Weiterhin ist ein Schlauchanschluss **36** dargestellt, über den mittels eines Schlauchs im Bedarfsfall das Wasser aus dem Wassergefäß **03** entlassen werden kann, vergleiche auch **Fig.** 7.

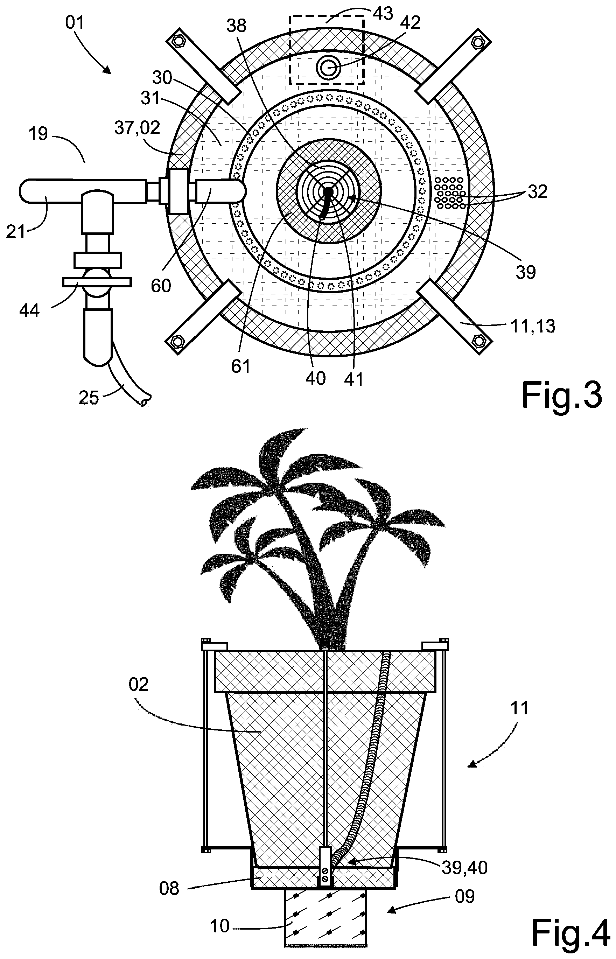

Die **Fig.** 3 zeigt die aquaponische Kulturanlage **01** von oben. Dargestellt sind ein oberer Rand **37** des Pflanzgefäßes **02** sowie die Stützplatte **31** mit der zentralen Öffnung **32.** Die Stützplatte **31** wird von den vier Haltern **13** der Stützvorrichtung **11** gehalten. Kräfte, die von einer großen Pflanze in der zentralen Öffnung **32** auf die Stützplatte **31** einwirken, werden berührungsfrei über den Rand **37** das Pflanzgefäßes **02** herübergeleitet. Durch die zentrale Öffnung **32** ist ein Drainagesieb **38** am Boden des Pflanzgefäßes **02** zu erkennen, durch das das Wasser aus dem Pflanzgefäß **02** in das Wassergefäß **03** gelangt. Weiterhin ist eine Notüberlaufvorrichtung **39** dargestellt, die einen leicht geneigt verlaufenden Schlauch **40** umfasst, der sich von einer Mittenöffnung **41** in dem Drainagesieb **38** bis zu einer Durchgangsöffnung **42** in der Stützplatte **31** erstreckt. Durch die Durchgangsöffnung **42** kann überschüssiges Wasser aus dem Pflanzgefäß **02** in das Wassergefäß **03** ablaufen. Auf die Durchgangsöffnung **42** kann bei Bedarf auch eine Futtervorrichtung **43** aufgesetzt werden (in der **Fig.** 3 gestrichelt dargestellt), sodass durch den Schlauch **40** auch Futter über das Drainagesieb **38** direkt in das Wassergefäß gelangt, ohne durch das Pflanzgefäß **02** zu rieseln. Um die Notüberlauffunktion zu gewährleisten, ist ein Bypass unterhalb der Stützplatte **31** von Vorteil, vergleiche **Fig.** 6. In der **Fig.** 3 ist weiterhin die Zulaufvorrichtung **19** zu erkennen, die das Zulaufrohr **21,** den Probenschlauch **25** und den Bewässerungsring **30** umfasst, der über ein Verbindungsstück **60** mit dem Zulaufrohr **21** wasserdurchlässig verbunden ist. Der Probenschlauch **25** ist über einen Absperrhahn **44** öffen- und schließbar.

Die **Fig.** 4 zeigt im Detail das Pflanzgefäß **02** ohne das Wassergefäß 03. Dargestellt ist die Trichtervorrichtung **09** mit der am Pflanzgefäß **02** fest montierten Bodenschale **08,** aus der der zylinderförmige Trichter **10** herausragt. Im Trichter **10** ist das Ende des Schlauches **40** als Teil der Notüberlaufvorrichtung **39** zu erkennen. Der zylinderförmige Trichter **10** hat keinen Boden. Das Wasser fließt durch seinen Querschnitt geräuscharm aus dem Pflanzgefäß **02** in das Wassergefäß **03.** Um das Pflanzgefäß **02** herum sind Elemente der Stützvorrichtung **11** zu erkennen.

Die **Fig.** 5 zeigt im Detail eine Draufsicht auf das Wassergefäß **03** ohne das Pflanzgefäß **02.** Zu erkennen ist eine Öffnung **45** im Deckel **04** des Wassergefäßes **03,** um das herum ein Drehlager **46** auf den Deckel **04** aufgelegt und erforderlichenfalls befestigt ist. Das Drehlager **46** ist im gezeigten Ausführungsbeispiel als Nadellager **47** ausgebildet und befindet sich als zwischen der Bodenschale **08** der Trichtervorrichtung **09** und dem Deckel **46** des Wassergefäßes **03.** Es weist eine zu Bodenschale **08** und Deckel **04** parallele Drehebene auf, sodass das Pflanzgefäß **02** einfach auf dem Wassergefäß **03** in beiden Richtungen hin- und hergedreht werden kann. Volldrehungen sind auch möglich, da die Zulaufvorrichtung **19** nicht mit dem Pflanzgefäß **02** verbunden ist. Die Stützvorrichtung **11** wird einfach mitgedreht. Weiterhin sind in der **Fig.** 5 drei Ventilatoren **48** als Teil einer Belüftungsvorrichtung **49** dargestellt, die am Wassergefäß **03** unter 120° Abstand zueinander befestigt sind und in drei unterschiedliche Raumrichtungen nach oben in den Bereich der Pflanze im Pflanzgefäß **02** Luft blasen und so einen Luftstrom erzeugen. Schließlich sind noch versetzt zu den Ventilatoren **48** drei Pflanzenlampen **50** als Teil einer Pflanzenlampeneinrichtung **51** unter 120° zueinander angeordnet, die die Pflanze von unten mit UV-Licht versorgen. Als weitere Komponenten können bei der aquaponischen Kulturanlage **01** vorhanden sein: ein Lautsprechersystem, eine Automatisierungseinrichtung, eine Fernsteuereinrichtung, eine Überwachungseinrichtung, eine Energieversorgungseinrichtung und / oder ein Insektenabwehrsystem. Diese Komponenten sind aber in den Figuren nicht dargestellt, da es sich um handelsübliche Komponenten handelt, die an vielen Stellen an der aquaponischen Kulturanlage **01** nach der Erfindung einfach angeordnet werden können.

Die **Fig.** 6 zeigt ein Detail im Bereich der Notüberlaufvorrichtung **39.** Zu erkennen ist der leicht gebogenen Schlauch **40,** der sich von der Mittenöffnung **41** im Drainagesieb **38** nach oben erstreckt. Seine Endöffnung **52** endet in der DurchgangsÖffnung **42** in der Stützplatte **31.** Kurz unterhalb der Endöffnung **52** befindet sich ein Bypassabzweig **53** mit einem kurzen Rohrstück **54.** Durch dieses kann Wasser im Notfall überlaufen, wenn die Endöffnung **52** verschlossen sein sollte.

Schließlich ist in der **Fig.** 7 ein Detail im Bereich der Aufstellung der aquaponischen Kulturanlage **01** dargestellt. Unterhalb der Trägerplatte **06** sind vier der fünf Stützbeine **16** zu erkennen. Diese sind um eine Zentralnabe **55** herum sternförmig angeordnet. Über mehrere (im gezeigten Ausführungsbeispiel sechs) horizontale Schraubelemente **56** und mehrere (im gezeigten Ausführungsbeispiel sechs) vertikale Schraubelemente **57** kann die aquaponische Kulturanlage **01** befestigt und gleichzeitig justiert werden. Unterstützend wirken die fünf verstellbaren Stabilisierungselemente **18,** vergleiche **Fig.** 1, die die Trägerplatte **06** auf den fünf Stützbeinen **16** abstützen. Bei einer Nachjustage stützen sie die Anlage **01** ab, während die horizontalen Schraubelemente **56** und die vertikalen Schraubelemente **57** nachjustiert werden. Dies ist vorteilhaft, da das ganze Gewicht der aquaponischen Kulturanlage **01** auf der Zentralnabe **54** bzw. auf den fünf Stützbeinen **16** ruht. Neigungen und Unebenheiten des Untergrunds können optimal ausgeglichen werden, eine Feinjustage kann über die verstellbaren Stabilisierungselemente **18** vorgenommen werden. Weiterhin zeigt die **Fig.** 7 noch ein Detail im Bereich der Trägerplatte 06. Zu erkennen ist, dass das Wasserstandsrohr **28** über eine Rohrverbindung **58** mit dem Ablaufrohr **26** verbunden ist, sodass die weiter oben beschriebenen Funktionen gewährleistet sind, vergleiche Fig. 1. Weiterhin ist ein Ablaufventil **59** zu erkennen, der vor dem Schlauchanschluss **36** sitzt, vergleiche **Fig.** 2, über den Wasser aus dem Wassergefäß **03** abgeleitet (oder im Bedarfsfall auch zugeleitet) werden kann.

Die aquaponische Kulturanlage **01** gemäß der vorliegenden Erfindung kann in verschiedenen Bereichen und für unterschiedliche Personengruppen eingesetzt werden. Beispielsweise für wissenschaftliche Experimente, als dekoratives Element für Privatpersonen oder Unternehmen oder für die Aufzucht und Produktion von landwirtschaftlichen und aquatischen Produkten. Die wichtigste Fähigkeit dieses Systems ist jedoch, dass es jedem Laien ermöglicht, Fische und Pflanzen zu Hause zu züchten. Es trägt nicht nur zur Ästhetik des Hauses bei, sondern ermöglicht es auch bei einer Skalierung des Wassergefäßes, einen Teil des täglichen Bedarfs an Nahrung und Proteinen selbst zu produzieren. Die mit der Erfindung beanspruchte Anlage ist multifunktional und flexibel. Es kann bei Bedarf auch in ein kombiniertes Hydroponik- und Aeroponik-System umgewandelt werden. Ohne den Bedarf an Fischen und durch die Installation einer Dosierungspumpe sowie Behältern für verschiedene Düngemittel und Nährstoffe und die Einstellung der gewünschten Dosierung für die Pflanzen ist eine effektive Nutzung möglich. Schließlich ist es sogar möglich, die Anlage als Meerwassersystem zu verwenden, in dem problemlos beispielsweise ein sehr attraktiver Mangrovenbaum aufwächst. Im Wassergefäß können Korallen, Zierfische aus Salzwasser sowie essbare Salzwasserfische gehalten und gezüchtet werden.

### Bezugszeichenliste

- **01**: aquaponische Kulturanlage
- **02**: Pflanzgefäß
- **03**: Wassergefäß
- **04**: Deckel
- **05**: Boden
- **06**: Trägerplatte
- **07**: Beleuchtungssystem
- **08**: Bodenschale
- **09**: Trichtervorrichtung
- **10**: Trichter
- **11**: Stützvorrichtung
- **12**: Verbindungsvorrichtung
- **13**: Halter
- **14**: Stützstange
- **15**: Winkel
- **16**: Stützbein
- **17**: Rolle
- **18**: Stabilisierungselement
- **19**: Zulaufvorrichtung
- **20**: Wasserpumpe
- **21**: Zulaufrohr
- **22**: Zulaufventil
- **23**: Durchflussmessgerät
- **24**: Absperrhahn
- **25**: Probenschlauch
- **26**: Ablaufrohr
- **27**: Ablaufsieb
- **28**: Wasserstandsrohr
- **29**: Ventil
- **30**: Bewässerungsring
- **31**: Stützplatte
- **32**: Durchlassöffnung
- **33**: Filtermatte
- **34**: Zugangsöffnung
- **35**: Elektrokabel
- **36**: Schlauchanschluss
- **37**: oberer Rand
- **38**: Drainagesieb
- **39**: Notüberlaufvorrichtung
- **40**: Schlauch
- **41**: Mittenöffnung
- **42**: Durchgangsöffnung
- **43**: Futtervorrichtung
- **44**: Absperrhahn
- **45**: Öffnung
- **46**: Drehlager
- **47**: Nadellager
- **48**: Ventilator
- **49**: Belüftungsvorrichtung
- **50**: Pflanzenlampe
- **51**: Pflanzenlampeneinrichtung
- **52**: Endöffnung
- **53**: Bypassabzweig
- **54**: Rohrstück
- **55**: Zentralnabe
- **56**: horizontales Schraubelement
- **57**: vertikales Schraubelement
- **58**: Rohrverbindung
- **59**: Ablaufventil
- **60**: Verbindungsstück
- **61**: zentrale Öffnung

## Patentansprüche

1. Aquaponische Kulturanlage (01) mit einem Pflanzgefäß (02) für zumindest eine größere Einzelpflanze und einem Wassergefäß (03) für Wassertiere, wobei das Pflanzgefäß (02) auf dem Wassergefäß (03) angeordnet ist, sowie mit einer Stützvorrichtung (11) für die Einzelpflanze, die eine im oberen Rand (37) des Pflanzgefäßes (02) angeordnete Stützplatte (31) mit einer zentralen Öffnung (61) umfasst, und mit Stützbeinen(16), die sich am Untergrund abstützen,
**dadurch gekennzeichnet, dass**
• eine Trichtervorrichtung (09) mit einer Bodenschale (08) vorgesehen ist, wobei die Bodenschale (08) fest mit dem Pflanzgefäß (02) an dessen unterem Ende verbunden ist und in ihrer Bodenmitte eine Öffnung aufweist, in dem ein Drainagesieb (38), das in das Pflanzgefäß (02) hineinragt, und darunter ein Trichter (10) , der in das Wassergefäß (03) hineinragt, angeordnet sind,
• die Stützvorrichtung (11) eine feste Verbindungsvorrichtung (12) zwischen der Stützplatte (31) und der Bodenschale (08) der Trichtervorrichtung (09) umfasst und dass
• zumindest ein Drehlager (46) vorgesehen ist, das zwischen der Bodenschale (08) der Trichtervorrichtung (09) und dem Wassergefäß (03) angeordnet ist und eine dazu parallele Drehebene aufweist.

2. Aquaponische Kulturanlage (01) nach Anspruch 1,
**dadurch gekennzeichnet, dass**
• das Drehlager (46) als ringförmiges Nadellager (47) ausgebildet und um den Trichter (10) herum angeordnet ist, wobei vorhandene Versorgungsleitungen nicht mit dem Pflanzgefäß (02) verbunden sind.

3. Aquaponische Kulturanlage (01) nach Anspruch 1 oder 2,
**dadurch gekennzeichnet, dass**
• unterhalb des Wassergefäßes (03) fünf oder mehr Stützbeine (16) vorgesehen sind, die sternförmig um eine Zentralnabe (55) angeordnet sind, wobei die Zentralnabe (55) fest mit dem Wassergefäß (03) verbunden ist.

4. Aquaponische Kulturanlage (01) nach Anspruch 3,
**dadurch gekennzeichnet, dass**
• horizontale Schraubelemente (56) und vertikale Schraubelemente (57) vorgesehen sind, die an der Zentralnabe (55) angeordnet sind und der Befestigung und Ausbalancierung der Wassergefäßes (03) dienen.

5. Aquaponische Kulturanlage (01) nach Anspruch 3 oder 4,
**dadurch gekennzeichnet, dass**
• verstellbare Stabilisierungselemente (18) vorgesehen sind, die der Abstützung des Wassergefäßes (03) auf den Stützbeinen (16) dienen.

6. Aquaponische Kulturanlage (01) nach einem der vorangehenden Ansprüche, **dadurch gekennzeichnet, dass**
• feststellbare Rollen (17) vorgesehen sind, über die sich die Stützbeine (16) am Untergrund abstützen.

7. Aquaponische Kulturanlage (01) nach einem der vorangehenden Ansprüche, **dadurch gekennzeichnet, dass**
• eine Notüberlaufvorrichtung (39) vorgesehen ist, die einen Schlauch (40) umfasst, der sich von einer Durchgangsöffnung (42) in der Stützplatte (31) bis zu einer Mittenöffnung (41) in dem Drainagesieb (38) erstreckt.

8. Aquaponische Kulturanlage (01) nach Anspruch 7,
**dadurch gekennzeichnet, dass**
• eine Futtervorrichtung (43) vorgesehen ist, die mit dem Schlauch (40) im Bereich der Durchgangsöffnung (42) verbunden ist, wobei im Schlauch (40) unterhalb der Stützplatte (31) ein Bypassabzweig (53) angeordnet ist.

9. Aquaponische Kulturanlage (01) nach einem der vorangehenden Ansprüche, **dadurch gekennzeichnet, dass**
• eine Zulaufvorrichtung (19) vorgesehen ist, die mit dem Wassergefäß (03) fest verbunden ist, wobei sie das Pflanzgefäß (02) nicht berührt, und einen Bewässerungsring (30) umfasst, der oberhalb der Stützplatte (31) angeordnet ist.

10. Aquaponische Kulturanlage (01) nach Anspruch 9,
**dadurch gekennzeichnet, dass**
• die Zulaufvorrichtung (19) ein Durchflussmessgerät (23), einen Probenschlauch (25) und eine Wasserpumpe (20) umfasst, wobei die Wasserpumpe (20) im Wassergefäß (03) angeordnet ist.

11. Aquaponische Kulturanlage (01) nach einem der vorangehenden Ansprüche, **dadurch gekennzeichnet, dass**
• eine ringförmige Filtermatte (33) vorgesehen ist, die unterhalb der Stützplatte (31) angeordnet ist.

12. Aquaponische Kulturanlage (01) nach einem der vorangehenden Ansprüche, **dadurch gekennzeichnet, dass**
• ein Substrat vorgesehen ist, das aus Blähtonkugeln besteht und in das Pflanzgefäß (02) eingefüllt ist.

13. Aquaponische Kulturanlage (01) nach einem der vorangehenden Ansprüche, **dadurch gekennzeichnet, dass**
• ein im Wassergefäß (03) angeordnetes Ablaufrohr (26) mit Ablaufsieb (27) und ein außen am Wassergefäß (03) angeordnetes Wasserstandsrohr (28) vorgesehen sind, die miteinander verbunden sind.

14. Aquaponische Kulturanlage (01) nach einem der vorangehenden Ansprüche, **dadurch gekennzeichnet, dass**
• ein ringförmiges Beleuchtungssystem (07) vorgesehen ist, das im unteren Bereich des Wassergefäßes (02) angeordnet ist, wobei dessen Boden (05) transparent ist.

15. Aquaponische Kulturanlage (01) nach einem der vorangehenden Ansprüche, **dadurch gekennzeichnet, dass**
• ein Lautsprechersystem, eine Automatisierungseinrichtung, eine Fernsteuereinrichtung, eine Überwachungseinrichtung, eine Energieversorgungseinrichtung, eine Belüftungseinrichtung (49), eine Pflanzenlampeneinrichtung (51) und/oder ein Insektenabwehrsystem vorgesehen sind.
